# FASCICULE DE BREVET EUROPEEN

(11) **EP 1 388 488 B1**
(45) Date de publication et mention de la délivrance du brevet: **26.11.2008**
(21) Numéro de dépôt: 03291776.7
(22) Date de dépôt: 17.07.2003
(51) Int. Cl.: B62D 55/24, B62D 55/253, D07B 1/06

(54) **Câble de renforcement pour chenille souple sans fin**
Verstärkungskabel für Gummi- Raupenkette
Reinforcement cable for rubber track

(30) Priorité: 07.08.2002 FR 0210054
(43) Date de publication de la demande: 11.02.2004
(73) Titulaire: OTICO, 77650 Longueville (FR)
(72) Inventeur: Phely, Olivier, 77520 Thenisy (FR)
(74) Mandataire: Bezault, Jean

(56) Documents cités:
- EP-A- 0 568 271
- EP-A- 0 709 236
- EP-A- 0 742 382
- WO-A-01/89913

## Description

L'invention concerne une chenille souple sans fin équipée d'un câble de renforcement.

Plus particulièrement, l'invention concerne une chenille à bande souple sans fin en élastomère, comprenant un câble de renforcement enroulé en hélice dans l'épaisseur de la bande pour former une pluralité de spires généralement parallèles entre elles.

Une chenille à bande souple sans fin de ce type est connue d'après EP-A-0 742 382: ce document couvre le préambule de la revendication 1.

Les chenilles à bande souple sans fin sont utilisées de plus en plus en remplacement des chenilles classiques composées de maillons métalliques articulés entre eux.

De telles chenilles souples trouvent une application dans de nombreux véhicules tout terrain, tels que des engins agricoles et de travaux publics.

Une chenille souple de ce type se compose d'une bande souple sans fin en élastomère, généralement à base de caoutchouc naturel, venant s'enrouler autour de deux roues d'extrémité, dont l'une au moins est motrice.

Une telle bande souple est généralement munie, sur son côté extérieur, de crampons pour favoriser l'adhérence avec le sol et, sur son côté intérieur, de moyens pour engrener avec la ou les roue(s) motrice(s).

Une autre chenille à bande souple sans fin de ce type est connue par le brevet FR-A-2 711 959 (9313211) au nom de la Demanderesse. Cette bande sans fin comporte extérieurement une surface de roulement à crampons et elle est munie intérieurement d'une rangée de plots, en forme de pyramide, situés dans le sens de la longueur de la bande et généralement équidistants entre eux.

Cette bande souple est renforcée intérieurement, c'est à dire dans son épaisseur, par des armatures obtenues, de façon classique, par la superposition de nappes de matériaux à chaîne et à trame.

Comme déjà indiqué, le renforcement de la bande se fait essentiellement par un câble en acier qui vient s'enrouler en hélice dans l'épaisseur de la bande en formant des spires généralement parallèles entre elles.

En dehors du câble, on prévoit habituellement des couches d'éléments raidisseurs qui se situent du côté intérieur et/ou extérieur de la bande par rapport aux spires du câble.

La conception d'un câble de renforcement pose de nombreuses difficultés en pratique.

Tout d'abord, ce câble doit avoir une force de rupture élevée pour permettre à la bande de résister aux efforts particulièrement importants qu'elle subit lorsqu'elle est montée sur un véhicule tout terrain.

Ces efforts comprennent notamment une précharge de tension de la bande et des efforts de transmission de couple au niveau de la roue motrice.

En dehors de cette condition de résistance élevée à la rupture, le câble doit présenter une grande souplesse longitudinale pour permettre une déformation de la bande lors de son fonctionnement et limiter ainsi la puissance absorbée lors de l'enroulement de la bande. De plus, un tel câble doit présenter un encombrement réduit compte tenu de la relativement faible épaisseur de la bande. Typiquement, celle-ci est généralement comprise entre 26 et 30 millimètres.

Il faut donc que le câble satisfasse à un rapport encombrement/résistance à la rupture favorable. Par ailleurs, il est essentiel que le câble, qui est noyé dans l'épaisseur de la bande, puisse adhérer parfaitement au matériau de la bande et que celui-ci puisse pénétrer dans la structure même du câble.

Différentes solutions ont été proposées jusqu'à présent pour tenter de remédier au problème ci-dessus.

Dans la plupart des solutions connues, chaque brin de câble comprend deux couches, à savoir une couche intérieure encore appelée coeur qui peut se limiter à un seul filament et une couche extérieure composée de plusieurs filaments, identiques ou non aux filaments du coeur, et formant des torsades autour du filament intérieur.

Ces solutions connues ne permettent pas de satisfaire aux différents critères mentionnés ci-dessus.

On connait par ailleurs, d'après EP-A-0 568 271 et EP-A-0 709 236, des câbles de renforcement à plusieurs couches destinés à des pneumatiques à carcasse radiale.

L'invention a notamment pour but de surmonter les inconvénients précités.

Elle vise en particulier à procurer une chenille à bande souple sans fin en élastomère, du type défini précédemment, dont le câble de renforcement réunit les avantages d'un faible encombrement et d'une résistance élevée à la rupture et dont la structure facilite la pénétration du matériau élastomère, lorsque le câble est noyé dans une bande en élastomère.

L'invention vise aussi à procurer une chenille susceptible d'être réalisée dans différentes dimensions et convenant à des véhicules tout terrain de nature différente.

L'invention propose à cet effet une chenille à bande souple sans fin du type défini ci-dessus, dans laquelle le câble de renforcement comprend une pluralité de brins, dont chaque brin comprend un coeur composé d'au moins trois filaments, d'une couche intermédiaire composé d'une pluralité de filaments et entourant le coeur, ainsi qu'une couche extérieure composée d'une pluralité de filaments et entourant la couche intermédiaire.

Ainsi, le câble de la chenille de l'invention se compose de trois couches, à savoir le coeur formant couche intérieure, la couche intermédiaire et la couche extérieure. Cette structure en trois couches est de nature à favoriser, à encombrement égal avec des câbles de la technique antérieure, une souplesse longitudinale plus grande, tout en conservant les avantages d'une résistance élevée à la rupture.

Le câble de la chenille de l'invention offre en outre l'avantage de présenter une meilleure résistance à la fatigue en raison du grand nombre de brins qui le composent.

Par ailleurs, cette structure particulière à trois couches facilite la pénétration du matériau élastomère lorsque le câble est noyé dans la bande sans fin lors de sa fabrication.

Dans une forme de réalisation préférée de l'invention, le coeur est composé de trois filaments torsadés, la couche intermédiaire de neuf filaments torsadés et la couche extérieure de quinze filaments torsadés. Dans un tel câble, il est avantageux que les filaments du coeur, les filaments de la couche intermédiaire et les filaments de la couche extérieure aient tous le même diamètre.

Dans cette forme de réalisation préférée de l'invention, le câble comprend un brin central entouré par six brins périphériques.

Ainsi, dans cette forme de réalisation préférée, le câble comprend un brin central entouré par six brins périphériques et, les brins sont tous identiaues et comprennent chacun un coeur composé de trois filaments torsadés, une couche intermédiaire composée de neuf filaments torsadés et une couche extérieure composée de quinze filaments torsadés.

Dans l'invention, les filaments ont avantageusement un diamètre compris entre 0,2 et 0,3 mm et, de préférence, proche de 0,25 mm.

Quant au câble, son diamètre est avantageusement compris entre 4 et 6 mm, et de préférence, proche de 5 mm.

La chenille comprend avantageusement au moins deux couches d'éléments raidisseurs noyés dans l'épaisseur de la bande et s'étendant chacun dans une direction transversale ou oblique par rapport aux spires du câble.

Notamment, la chenille peut comprendre une couche dite "couche intérieure" située du côté intérieur de la bande par rapport aux spires du câble et composée d'éléments raidisseurs s'étendant dans une direction transversale par rapport aux spires du câble.

La chenille peut comprendre aussi au moins deux couches dites "couches extérieures" situées du côté extérieur de la bande par rapport aux spires du câble et composées d'éléments raidisseurs s'étendant dans une direction transversale ou oblique par rapport aux spires du câble.

Ainsi, dans une forme de réalisation, la chenille comprend deux couches extérieures composées respectivement d'éléments raidisseurs s'étendant dans des directions obliques différentes par rapport aux spires du câble pour former des nappes croisées.

Le cas échéant, la chenille peut comprendre en outre une couche extérieure supplémentaire composée d'éléments raidisseurs s'étalant dans une direction transversale par rapport aux spires du câble.

Dans une telle chenille, les éléments raidisseurs ont de préférence des dimensions différentes dans la direction de la largeur de la bande, et cela pour éviter la formation de points durs qui risqueraient d'entraîner un décollement du matériau élastomère.

Dans la description qui suit, faite seulement à titre d'exemple, on se réfère aux dessins annexés, sur lesquels :
- la figure 1 est une vue partielle de côté d'une chenille souple s'enroulant autour d'une roue motrice ;
- la figure 2 est une vue en coupe d'un brin à trois couches de filaments propres à faire partie d'un câble de renforcement selon l'invention
- la figure 3 est une vue en coupe d'un câble de renforcement comportant sept brins tels que représentés sur la figure 2 ;
- les figures 4 à 8 sont des vues en coupe de cinq bandes souples sans fin munies d'un câble de renforcement selon l'invention et de différents types d'éléments raidisseurs ;
- la figure 9 est une vue schématique de dessus montrant 2 nappes croisées de raidisseurs ; et
- la figure 10 est une vue de dessus montrant une nappe d'éléments raidisseurs s'étendant dans une direction transversale par rapport aux spires du câble de renforcement.

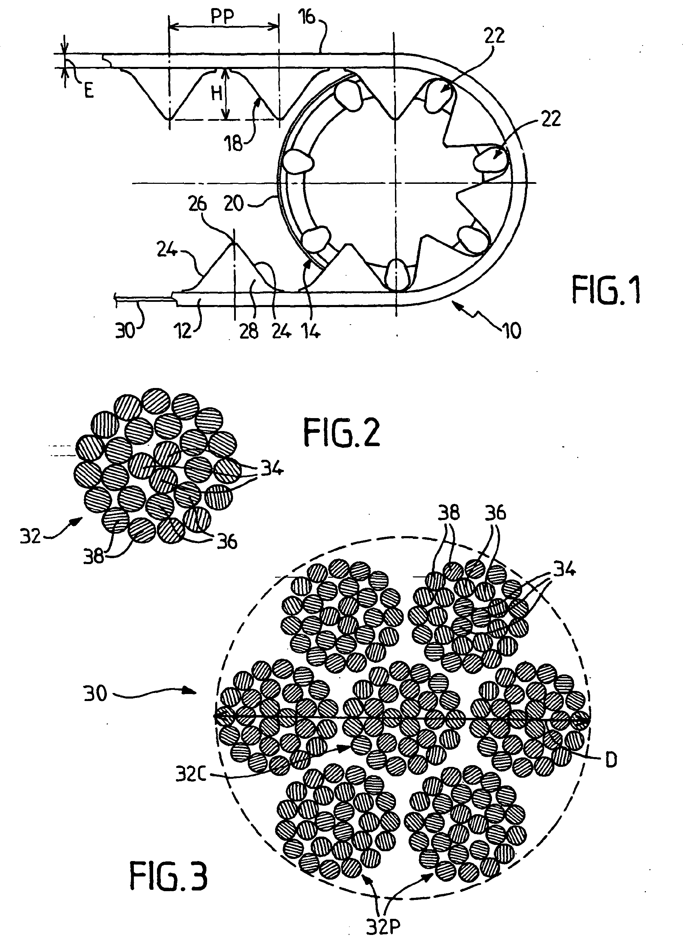

On se réfère d'abord à la figure 1 qui représente un dispositif d'entraînement d'une chenille souple 10 s'enroulant autour d'une roue motrice 14. Un tel dispositif d'entraînement est susceptible d'équiper des véhicules tout terrain de nature diverse, par exemple des engins agricoles, des engins de travaux publics, etc... La chenille 10 est formée d'une bande souple sans fin 12 réalisée en matériau élastomère, par exemple à base de caoutchouc naturel et renforcée intérieurement, c'est à dire dans son épaisseur, par des armatures, comme on le verra plus loin.

Ces armatures sont formées par la superposition de nappes de matériau à chaîne et à trame comportant généralement des fils métalliques.

La bande sans fin 12 comporte extérieurement une surface de roulement 16 habituellement munie de crampons (non représentés sur la figure 1). Elle est munie intérieurement d'une rangée de plots 18 situés dans le sens de la longueur de la bande et en principe équidistants entre eux d'un pas PP.

La roue motrice 14 est formée de deux jantes symétriques 20 réunies entre elles, à intervalle régulier, par des taquets d'entraînement 22. Ces taquets sont disposés parallèlement entre eux à la périphérie de la roue et parallèlement aux génératrices de cette dernière. Ils sont distants entre eux, au niveau de la périphérie de la roue motrice 14, d'un pas circonférentiel dont la valeur est comprise entre 93 % et 100 % de la valeur PP du pas des plots 10, qui ont une hauteur H.

Comme on le voit également sur la figure 1, les plots 18 ont sensiblement la forme d'une pyramide. Ils comprennent chacun deux faces obliques 24 aboutissant à une face supérieure 26 et deux faces latérales 28.

La bande souple sans fin 12, en dehors des crampons (non représentés) et des plots, a une épaisseur E qui est typiquement comprise entre 26 et 30 mm, le plus souvent proche de 28 mm.

La bande 12 est renforcée intérieurement, c'est à dire dans son épaisseur, par un câble de renforcement 30 qui est enroulé en hélice de manière continue pour former des spires généralement parallèles entre elles.

On se réfère maintenant à la figure 2 qui montre un brin 32 propre à faire partie d'un câble de renforcement, dans une forme de réalisation préférée de l'invention.

Le brin 32 de la figure 2 se compose de trois couches superposées, une couche intérieure appelée coeur qui est composée de trois filaments 34 torsadés, une couche intermédiaire composée de neuf filaments 36 torsadés et d'une couche extérieure composée de quinze filaments 38 torsadés. Dans l'exemple, tous les filaments sont identiques et sont formés en acier. Ils ont typiquement un diamètre compris entre 0,2 et 0,3 mm, de préférence proche de 0,25 mm. Les torsades des filaments 34 du coeur, des filaments 36 de la couche intermédiaire et des filaments 38 de la couche extérieure ont de préférence des pas différents. On constate qu'on forme ainsi une structure aérée puisqu'elle laisse des vides entre les couches. Malgré cette structure aérée, le brin présente l'avantage d'offrir une grande souplesse et une résistance élevée à la rupture. On constate aussi qu'il comporte un vide en son centre, c'est à dire au niveau de la fibre neutre, ce qui présente des avantages au niveau de la résistance du câble. Ceci permet aussi la pénétration, dans une certaine mesure, du matériau élastomère au coeur même du brin.

On se réfère maintenant à la figure 3 qui montre un câble 30 obtenu par l'assemblage de sept brins 32 conformes à la figure 2. Ces sept brins sont identiques entre eux. Ils comprennent un brin central 32C entouré par six brins périphériques 32P. Dans un tel câble, les brins périphériques 32P sont torsadés par rapport au brin central 32C.

Lorsque le câble 30 de la figure 3 est composé de filaments ayant typiquement un diamètre compris entre 0,2 et 0,3 mm, le Diamètre du câble est généralement compris entre 4 et 6 mm. Cette valeur de diamètre est favorable et convient tout particulièrement à une bande dont l'épaisseur e est comprise entre 26 et 30 mm, comme déjà indiqué.

Dans un exemple de réalisation d'un câble conforme à la figure 3, tous les filaments des sept brins ont un diamètre de 0,245 mm. Autrement dit, la structure du câble peut s'énoncer ainsi : 7 x (3x0,245 mm + 9x0,245 mm + 15x0,245 mm).

En variante, le câble pourrait comporter, par exemple, sept brins avec chacun quatre filaments 34 de coeur d'un diamètre de 0,22 mm, neuf filaments 36 de la couche intermédiaire d'un diamètre de 0, 245 mm et quinze filaments 38 de la couche extérieure d'un diamètre de 0, 245 mm. La structure d'un tel câble s'énonce ainsi : 7 x (4 x 0,22 mm + 9 x 0,245 mm + 15 x 0,245 mm).

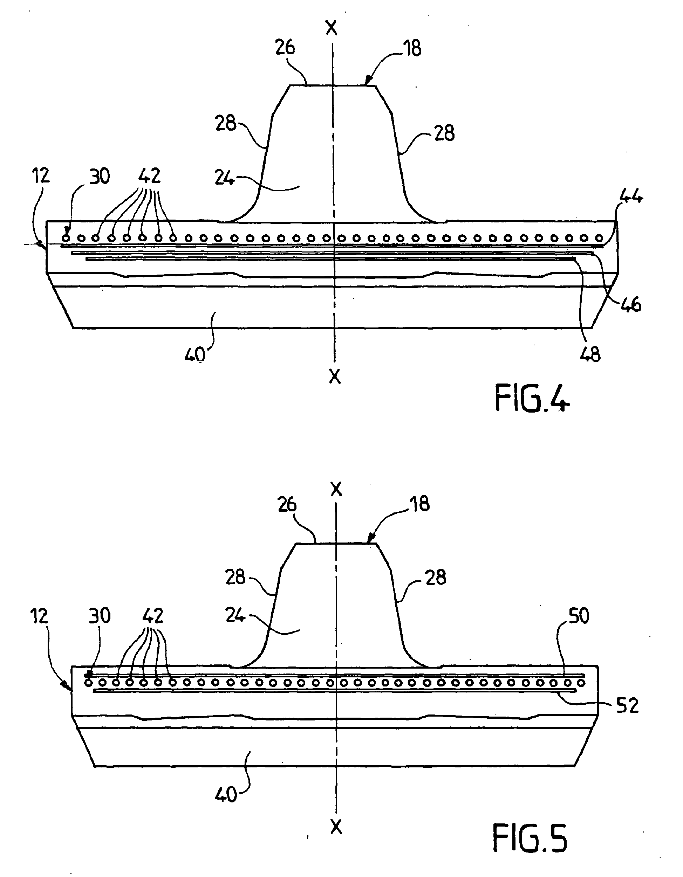

On se réfère maintenant à la figure 4 qui montre en coupe une bande dans une première forme de réalisation de l'invention. La bande 12 est munie intérieurement de plots 18 et extérieurement de crampons 40. Dans l'épaisseur de la bande est noyé un câble 30 selon l'invention qui est enroulé en hélice pour former une pluralité de spires 42 s'étendant parallèlement entre elles. La bande est également renforcée par trois couches d'éléments raidisseurs qui toutes, s'étendent du côté extérieur de la bande par rapport aux spires 42 du câble. Autrement dit, ces trois couches sont toutes situées du côté de la bande 12 qui porte les crampons 40.

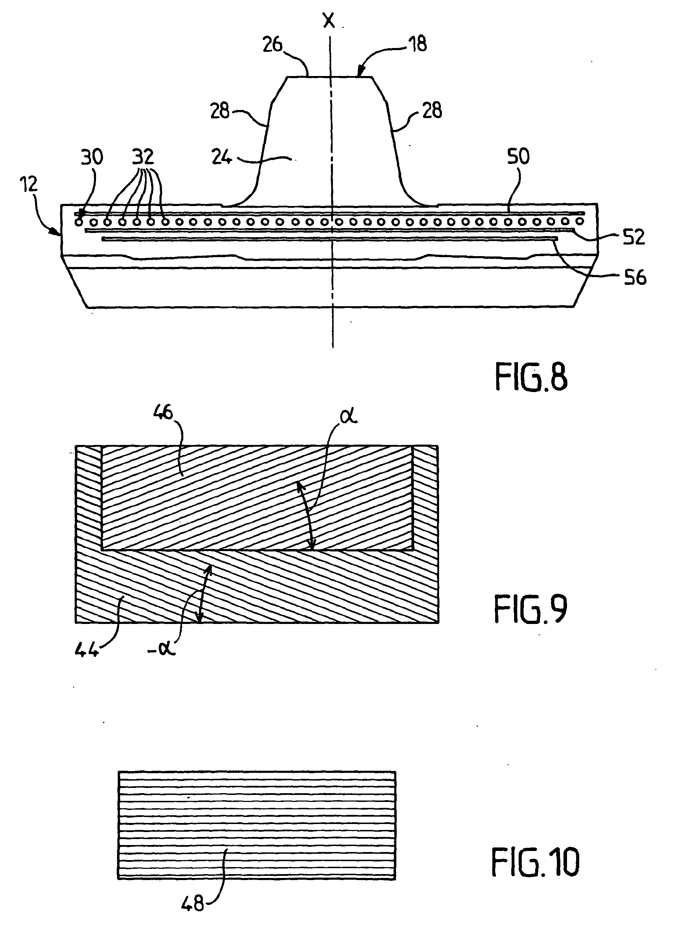

On distingue une première couche extérieure 44 formée de raidisseurs s'étendant dans une direction oblique, une deuxième couche 46 de raidisseurs s'étendant dans une autre direction oblique et une troisième couche 48 de raidisseurs s'étendant dans une direction transversale. Les raidisseurs des couches 44 et 46 sont croisés mutuellement, comme on le voit sur la figure 9.

Comme on le voit le mieux sur la figure 9, les raidisseurs 44 forment un angle alpha par rapport à une perpendiculaire aux spires 42, tandis que les raidisseurs de la couche 46 forment aussi un angle alpha par rapport à cette même perpendiculaire, mais en sens opposé. L'angle alpha peut être par exemple de 20 degrés.

Par contre, comme on le voit sur la figure 10, les raidisseurs de la couche 48 s'étendent dans une direction transversale, c'est à dire perpendiculaire aux spires 42.

Comme on peut le voir sur la coupe de la figure 4, les couches 44, 46 et 48 s'étendent sur des largeurs différentes dans le sens de la largeur de la bande. Cela signifie qu'elles se terminent à des distances différentes par rapport à l'axe médian de la bande. Ceci évite la formation de points durs susceptibles de favoriser le décollement du matériau élastomère dans lequel sont noyés le câble et les couches de raidisseurs.

Les raidisseurs sont formés avantageusement de fils métalliques ou synthétiques noyés dans une couche d'élastomère, par exemple de caoutchouc, en formant une nappe calandrée.

Dans la forme de réalisation de la figure 5, la bande comporte une couche intérieure 50 formée d'éléments raidisseurs qui s'étendent dans la direction transversale et une couche extérieure 52 formée d'éléments raidisseurs qui s'étendent aussi dans la direction transversale.

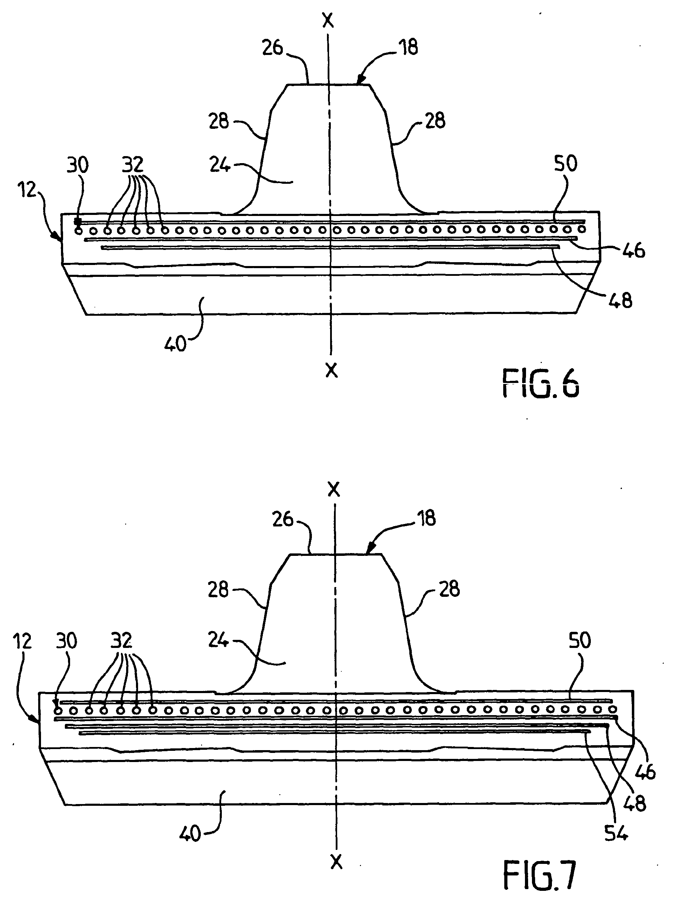

Dans la forme de réalisation de la figure 6, la bande comprend une couche intérieure 50 d'éléments raidisseurs analogues à la couche 50 de la figure 4. Elle comporte en outre deux couches extérieures, à savoir deux couches obliques 46 et 48 analogues à celles de la figure 4. Les deux couches obliques forment des couches croisées.

Dans la forme de réalisation de la figure 7, qui s'apparente à celle de la figure 6, on retrouve une couche intérieure 50 et deux couches extérieures 46 et 48. Une couche supplémentaire 54 formée d'éléments raidisseurs s'étendant dans la direction transversale est en outre prévue dans l'épaisseur de la bande.

Enfin, dans la forme de réalisation de la figure 8, on trouve en outre deux couches extérieures, à savoir une couche 52 analogue à celle de la figure 5 et composée d'éléments raidisseurs s'étendant dans la direction transversale, et une autre couche extérieure 56 composée d'éléments raidisseurs s'étendant également dans la direction transversale.

Les éléments raidisseurs représentés aux figures 4 à 8 ont typiquement une épaisseur ou un diamètre inférieur à celui du câble 30.

Bien entendu, d'autres types d'éléments raidisseurs sont possibles dans le cadre de l'invention.

Le câble de l'invention est lui-même susceptible de nombreuses variantes de réalisations.

Ainsi, le coeur du brin pourrait être formé de quatre filaments au lieu de trois et ces filaments pourraient avoir un diamètre plus faible que les filaments de la couche intermédiaire et de la couche extérieure.

Toutefois, dans la forme de réalisation préférée de l'invention, tous les filaments ont le même diamètre pour faciliter la fabrication.

Comme déjà indiqué, le câble de l'invention offre l'avantage de réunir une grande souplesse longitudinale, une résistance à la rupture élevée, un encombrement réduit et une accessibilité au matériau élastomère dans lequel le câble est noyé.

Il présente aussi une meilleure résistance à la fatigue lors des enroulements et des flexions.

La chenille de l'invention peut être utilisée dans différents types de véhicules tout terrain.

## Revendications

1. Chenille à bande souple sans fin en élastomère, comprenant un câble de renforcement (30) enroulé en hélice dans l'épaisseur (E) de la bande (12) pour former une pluralité de spires (42) généralement parallèles entre elles, **caractérisée en ce que** le câble de renforcement (30) comprend une pluralité de brins (32), dont chaque brin (32) est formé de filaments en acier et comprend un coeur composé d'au moins trois filaments (34), une couche intermédiaire composée d'une pluralité de filaments (36) et entourant le coeur, ainsi qu'une couche extérieure composée d'une pluralité de filaments (38) et entourant la couche intermédiaire.

2. Chenille à bande souple sans fin selon la revendication 1, **caractérisée en ce que** le coeur est composé de trois filaments (34) torsadés, que la couche intermédiaire est composée de neuf filaments (36) torsadés et que la couche extérieure est composée de quinze filaments (38) torsadés.

3. Chenille à bande souple sans fin selon la revendication 2, **caractérisée en ce que** les filaments (34) du coeur, les filaments (36) de la couche intermédiaire et les filaments (38) de la couche extérieure ont tous le même diamètre.

4. Chenille à bande souple sans fin selon l'une des revendications 1 à 3, **caractérisée en ce qu'**il comprend un brin central (32C) entouré par six brins périphériques (32P).

5. Chenille à bande souple sans fin selon la revendication 4, **caractérisé en ce que** le câble de renforcement (30) comprend un brin central (32C) entouré par six brins périphériques (32C), et **en ce que** les brins (32C), (32P) sont tous identiques et comprennent chacun un coeur composé de trois filaments torsadés (34), une couche intermédiaire composée de neuf filaments torsadés (36) et une couche extérieure composée de quinze filaments torsadés (38).

6. Chenille à bande souple sans fin selon l'une des revendications 1 à 5, **caractérisée en ce que** les filaments (34, 36, 38) ont un diamètre compris entre 0,2 et 0,3 mm, et de préférence proche de 0,25 mm.

7. Chenille à bande souple sans fin selon l'une des revendications 1 à 6, **caractérisée en ce que** le câble (30) a un diamètre (D) compris entre 4 et 6 mm, et de préférence proche de 5 mm.

8. Chenille à bande souple sans fin selon l'une des revendications 1 à 7 , **caractérisée en ce qu'**elle comprend au moins deux couches d'éléments raidisseurs (46 et 48, 50, 52, 54, 56) noyés dans l'épaisseur (E) de la bande (12) et s'étendant chacune dans une direction transversale ou oblique par rapport aux spires (42) du câble (30).

9. Chenille à bande souple sans fin selon la revendication 8, **caractérisée en ce qu'**elle comprend une couche (50) dite "couche intérieure" située du côté intérieur de la bande par rapport aux spires (42) du câble (30) et composée d'éléments raidisseurs s'étendant dans une direction transversale par rapport aux spires du câble.

10. Chenille à bande souple sans fin selon l'une des revendications 8 et 9, **caractérisée en ce qu'**elle comprend au moins deux couches (44, 46, 48) dites "couches extérieures" situées du côté extérieur de la bande par rapport aux spires (42) du câble (30) et composées d'éléments raidisseurs s'étendant dans une direction transversale ou oblique par rapport aux spires du câble.

11. Chenille à bande souple sans fin selon la revendication 10, **caractérisée en ce qu'**elle comprend deux couches extérieures (44, 46) composées respectivement d'éléments raidisseurs s'étendant dans des directions obliques et différentes par rapport aux spires (42) du câble (30) pour former des nappes croisées.

12. Chenille à bande souple sans fin selon la revendication 11, **caractérisée en ce qu'**elle comprend en outre une couche extérieure supplémentaire (52), composée d'éléments raidisseurs s'étendant dans une direction transversale par rapport aux spires (42) du câble (30).

13. Chenille à bande souple sans fin selon l'une des revendications 8 à 12, **caractérisée en ce que** les couches d'éléments raidisseurs (44, 46, 48, 50, 52) ont des dimensions différentes dans la direction de la largeur de la bande.

## Claims

1. Crawler track with a flexible endless belt made of an elastomer, comprising a reinforcing cable (30) wound in a helix in the thickness (E) of the belt (12) in order to form a plurality of turns (42) that are generally parallel to one another, **characterized in that** the reinforcing cable (30) comprises a plurality of strands (32), wherein each strand (32) is formed from steel filaments and comprises a core composed of at least three filaments (34), an intermediate layer composed of a plurality of filaments (36) and surrounding the core, and an outer layer composed of a plurality of filaments (38) and surrounding the intermediate layer.

2. Crawler track with a flexible endless belt according to Claim 1, **characterized in that** the core is composed of three twisted filaments (34), **in that** the intermediate layer is composed of nine twisted filaments (36) and **in that** the outer layer is composed of fifteen twisted filaments (38).

3. Crawler track with a flexible endless belt according to Claim 2, **characterized in that** the filaments (34) of the core, the filaments (36) of the intermediate layer and the filaments (38) of the outer layer all have the same diameter.

4. Crawler track with a flexible endless belt according to one of Claims 1 to 3, **characterized in that** it comprises a central strand (32C) surrounded by six peripheral strands (32P).

5. Crawler track with a flexible endless belt according to Claim 4, **characterized in that** the reinforcing cable (30) comprises a central strand (32C) surrounded by six peripheral strands (32C) and **in that** the strands (32C), (32P) are all identical and each comprise a core composed of three twisted filaments (34), an intermediate layer composed of nine twisted filaments (36) and an outer layer composed of fifteen twisted filaments (38).

6. Crawler track with a flexible endless belt according to one of Claims 1 to 5, **characterized in that** the filaments (34, 36, 38) have a diameter of between 0.2 and 0.3 mm and preferably close to 0.25 mm.

7. Crawler track with a flexible endless belt according to one of Claims 1 to 6, **characterized in that** the cable (30) has a diameter (D) of between 4 and 6 mm and preferably close to 5 mm.

8. Crawler track with a flexible endless belt according to one of Claim 1 to 7, **characterized in that** it comprises at least two layers of stiffening elements (46 and 48, 50, 52, 54, 56) embedded in the thickness (E) of the belt (12) and each lying in a direction transverse or oblique to the turns (42) of the cable (30).

9. Crawler track with a flexible endless belt according to Claim 8, **characterized in that** it comprises a layer (50) called the "inner layer" located on the inner side of the belt with respect to the turns (42) of the cable (30) and composed of stiffening elements lying in a direction transverse to the turns of the cable.

10. Crawler track with a flexible endless belt according to either of Claims 8 and 9, **characterized in that** it comprises at least two layers (44, 46, 48) called "outer layers" located on the outer side of the belt with respect to the turns (42) of the cable (30) and composed of stiffening elements lying in a direction transverse or oblique to the turns of the cable.

11. Crawler track with a flexible endless belt according to Claim 10, **characterized in that** it comprises two outer layers (44, 46) composed respectively of stiffening elements lying in different oblique directions to the turns (42) of the cable (30) in order to form crossed plies.

12. Crawler track with a flexible endless belt according to Claim 11, **characterized in that** it furthermore includes an additional outer layer (52) composed of stiffening elements lying in a direction transverse to the turns (42) of the cable (30).

13. Crawler track with a flexible endless belt according to one of Claims 8 to 12, **characterized in that** the layers of stiffening elements (44, 46, 48, 50, 52) have different dimensions in the width direction of the belt.

## Patentansprüche

1. Raupe aus biegsamen Endlosband aus Elastomer, mit einem Verstärkungskabel (30), das schraubenförmig in die Ausdehnung (E) des Bandes (12) eingerollt ist, um eine Mehrzahl von Windungen (42) zu bilden, die allgemein untereinander parallel sind, **dadurch gekennzeichnet, dass** das Verstärkungskabel (30) eine Mehrzahl von Einzeldrähten (32) aufweist, von denen jeder Einzeldraht (32) aus Stahlfasern gebildet ist und einen Kern, gebildet aus wenigstens drei Fasern (34), eine Zwischenschicht, die aus einer Mehrzahl von Fasern (36) zusammengesetzt ist und den Kern umgeben, sowie eine äußere Schicht aufweist, die aus einer Mehrzahl von Fasern (38) gebildet ist und die Zwischenschicht umgeben.

2. Raupe aus biegsamem Endlosband nach Anspruch 1, **dadurch gekennzeichnet, dass** der Kern aus drei verdrehten Fasern (34) gebildet ist, dass die Zwischenschicht aus neun verdrehten Fasern (36) gebildet ist und dass die Außenschicht aus fünfzehn verdrehten Fasern (38) gebildet ist.

3. Raupe aus biegsamem Endlosband nach Anspruch 2, **dadurch gekennzeichnet, dass** die Fasern (34) des Kerns, die Fasern (36) der Zwischenschicht und die Fasern (38) der Außenschicht alle den gleichen Durchmesser aufweisen.

4. Raupe aus biegsamem Endlosband nach einem der Ansprüche 1 bis 3, **dadurch gekennzeichnet, dass** sie einen Mitteldraht (32C) aufweist, der von sechs Umfangsdrähten (32P) umgeben ist.

5. Raupe aus biegsamem Endlosband nach Anspruch 4, **dadurch gekennzeichnet, dass** das Verstärkungskabel (30) einen Mitteldraht (32C) aufweist, der von sechs Umfangsdrähten (32C) umgeben ist, und dass die Drähte (32C) (32P) identisch sind und jeweils einen Kern aufweisen, der aus drei verdrehten Fasern (34), einer Zwischenschicht, gebildet aus neun verdrehten Fasern (36) und einer Außenschicht, gebildet aus fünfzehn verdrehten Fasern (38), gebildet ist.

6. Raupe aus biegsamem Endlosband nach einem der Ansprüche 1 bis 5, **dadurch gekennzeichnet, dass** die Fasern (34, 36, 38) einen Durchmesser zwischen 0,2 und 0,3 mm, und vorzugsweise in der Nähe von 0, 25 mm aufweisen.

7. Raupe aus biegsamem Endlosband nach einem der Ansprüche 1 bis 6, **dadurch gekennzeichnet, dass** das Kabel (30) einen Durchmesser (D) zwischen 4 und 6 mm und bevorzugt in der Nähe von 5 mm aufweist.

8. Raupe aus biegsamem Endlosband nach einem der Ansprüche 1 bis 7, **dadurch gekennzeichnet, dass** sie wenigstens zwei Schichten von Verstärkungselementen (46 und 48, 50, 52, 54, 56) aufweist, die in die Ausdehnung (E) des Bandes (12) eingetaucht sind uns sich jeweils in eine Richtung quer oder schräg bezüglich der Windungen (42) des Kabels (30) erstrecken.

9. Raupe aus biegsamem Endlosband nach Anspruch 8, **dadurch gekennzeichnet, dass** sie eine Schicht (50), genannt "Innenschicht" aufweist, die auf der Innenseite des Bandes bezüglich der Windungen (42) des Kabels (30) angeordnet ist und aus Verstärkungselementen gebildet ist, die sich in eine Richtung quer bezüglich der Windungen des Kabels erstrecken.

10. Raupe aus biegsamem Endlosband nach Anspruch 8 oder 9, **dadurch gekennzeichnet, dass** sie wenigstens zwei Schichten (44, 46, 48), genannt "Außenschichten" aufweist, die auf der Außenseite des Bandes bezüglich der Windungen (42) des Kabels (30) angeordnet sind und aus Verstärkungselementen gebildet sind, die sich in eine Richtung quer oder schräg bezüglich der Windungen des Kabels erstrecken.

11. Raupe aus biegsamem Endlosband nach Anspruch 10, **dadurch gekennzeichnet, dass** sie zwei Außenschichten (44, 46) aufweist, die jeweils aus Verstärkungselementen gebildet sind, die sich in geneigte und unterschiedliche Richtungen bezüglich der Windungen (42) des Kabels (30) erstrecken, um gekreuzte Bahnen zu bilden.

12. Raupe aus biegsamem Endlosband nach Anspruch 11, **dadurch gekennzeichnet, dass** sie darüber hinaus eine äußere Zusatzschicht (52) aufweist, die aus Verstärkungselementen gebildet ist, die sich in eine Richtung quer bezüglich der Windungen (42) des Kabels (30) erstrecken.

13. Raupe aus biegsamem Endlosband nach einem der Ansprüche 8 bis 12, **dadurch gekennzeichnet, dass** die Schichten aus Verstärkungselementen (44, 46, 48, 50, 52) unterschiedliche Abmessungen in der Richtung der Breite des Bandes aufweisen.
